(19) Europäisches Patentamt / European Patent Office / Office européen des brevets

(11) **EP 3 384 259 B1**

(12) **FASCICULE DE BREVET EUROPEEN**

(45) Date de publication et mention
de la délivrance du brevet:
**02.10.2019 Bulletin 2019/40**

(51) Int Cl.:
***G01J 9/02*** *(2006.01)*  ***G01J 11/00*** *(2006.01)*

(21) Numéro de dépôt: **16808946.4**

(22) Date de dépôt: **30.11.2016**

(86) Numéro de dépôt international:
**PCT/EP2016/079199**

(87) Numéro de publication internationale:
**WO 2017/093277 (08.06.2017 Gazette 2017/23)**

(54) **PROCEDE DE MESURE DES RETARDS RELATIFS ENTRE CANAUX DE PROPAGATION OPTIQUES EN REGIME IMPULSIONNEL**

VERFAHREN ZUR MESSUNG RELATIVER VERZÖGERUNGEN ZWISCHEN OPTISCHEN ÜBERTRAGUNGSKANÄLEN MIT GEPULSTEM BETRIEB

METHOD FOR MEASURING RELATIVE DELAYS BETWEEN OPTICAL PROPAGATION CHANNELS IN PULSED OPERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2015 FR 1502513**

(43) Date de publication de la demande:
**10.10.2018 Bulletin 2018/41**

(73) Titulaire: **Thales**
**92400 Courbevoie (FR)**

(72) Inventeurs:
• **BOURDERIONNET, Jérome**
  **94370 Sucy en Brie (FR)**
• **BRIGNON, Arnaud**
  **92340 Bourg-la-Reine (FR)**
• **ANTIER-MURGEY, Marie**
  **92160 Antony (FR)**

(74) Mandataire: **Henriot, Marie-Pierre**
**Marks & Clerk France**
**Conseils en Propriété Industrielle**
**Immeuble Visium**
**22, Avenue Aristide Briand**
**94117 Arcueil Cedex (FR)**

(56) Documents cités:

• **Marie Antier-Murgey: "Mesure interférométrique de phase et application à la combinaison cohérente d'un grand nombre de fibres amplificatrices", , 17 novembre 2014 (2014-11-17), XP055295722, Extrait de l'Internet: URL:https://tel.archives-ouvertes.fr/tel-0 1138459/file/VD2_ANTIER-MURGEY_MARIE_171 12 014.pdf [extrait le 2016-08-16]**
• **ANTIER MARIE ET AL: "Interferometric phase measurement techniques for coherent beam combining", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9344, 4 mars 2015 (2015-03-04), pages 93441T-93441T, XP060049614, DOI: 10.1117/12.2076721 ISBN: 978-1-62841-730-2**
• **DANIAULT L ET AL: "XCAN - A coherent amplification network of femtosecond fiber chirped-pulse amplifiers", EUROPEAN PHYSICAL JOURNAL. SPECIAL TOPICS, THE, SPRINGER, DE, FR, vol. 224, no. 13, 26 octobre 2015 (2015-10-26), pages 2609-2613, XP035575133, ISSN: 1951-6355, DOI: 10.1140/EPJST/E2015-02571-Y [extrait le 2015-10-26]**

• LOMBARD L ET AL: "Collective synchronization and phase locking of fs fiber amplifiers: Requirements and potential solutions", EUROPEAN PHYSICAL JOURNAL. SPECIAL TOPICS, THE, SPRINGER, DE, FR, vol. 224, no. 13, 26 octobre 2015 (2015-10-26), pages 2557-2566, XP035575127, ISSN: 1951-6355, DOI: 10.1140/EPJST/E2015-02565-9 [extrait le 2015-10-26]

**Description**

L'obtention de sources laser de hautes puissances (ou énergies) et de grandes luminances est aujourd'hui limitée par la tenue au flux des matériaux à gain. Une solution à ce problème est de répartir l'amplification sur plusieurs milieux à gain en parallèle puis de les recombiner.

Le domaine de l'invention est celui de la recombinaison cohérente d'un grand nombre de sources lasers élémentaires de forte puissance, et/ou de forte énergie dans le cas de sources impulsionnelles ultra-courtes, par exemple de largeur d'impulsion inférieure à 100 picosecondes.

Une telle recombinaison de sources lasers en régime impulsionnel impose par rapport au régime continu l'exigence supplémentaire que les impulsions doivent être non seulement en phase, mais également synchronisées. En d'autres termes, pour interagir, les impulsions doivent être superposées spatialement et temporellement. Cela impose donc de connaître les temps de propagation des impulsions dans chacun des canaux de propagation du système.

Les systèmes fibrés de réseaux d'amplificateurs recombinés de manière cohérente (systèmes CAN acronyme de l'expression anglo-saxonne « Coherent Amplifier Network ») comportent typiquement une multitude de tronçons de fibres, dont il est difficile de contrôler la longueur à moins d'1 cm de précision. Les longueurs optiques des différents canaux du système varient donc typiquement de quelques cms, soit un retard équivalent de quelques dizaines à quelques centaines de picosecondes. Ces retards varient de plus dynamiquement, principalement avec l'échauffement du système, mais aussi avec les fluctuations mécaniques environnantes. Or pour additionner 2 impulsions lasers de manière cohérente, ces impulsions doivent tout d'abord avoir un recouvrement temporel maximal : elles doivent être synchronisées. Ensuite pour avoir un maximum d'intensité, les impulsions doivent être en phase ou co-phasées.

Les techniques de mesure de phase et de co-phasage sont multiples et décrites par exemple dans la publication : « kHz closed loop interferometric technique for coherent fiber beam combining » de M. Antier et al, JSTQE 20(5). Pour ce qui est du problème de la synchronisation des impulsions, la méthode utilisée à ce jour consiste à ajuster manuellement le retard optique de chaque canal de propagation en maximisant le signal d'interaction non-linéaire entre les impulsions prises 2 à 2 dans un dispositif de type FROG tel que présenté dans la publication : « using phase retieval to measure the intensity and phase of ultrashort puises : frequency-resolved optical gating » de R. Trebino et al, J. Opt. Soc. Am A 10. Selon ce dispositif, l'une des impulsions passe par une ligne à retard variable, et les chemins de propagation des 2 impulsions se rencontrent dans un cristal non-linéaire. La ligne à retard est ajustée jusqu'à maximiser le signal généré par interaction non linéaire entre les impulsions. La valeur de la ligne à retard donne alors le retard entre les impulsions. Cette méthode permet effectivement de recaler les retards relatifs de chaque impulsion par rapport aux autres, de manière très fiable et précise (à la femtoseconde près), mais elle ne peut être mise en oeuvre collectivement pour un grand nombre d'impulsions, même supérieur à quelques dizaines seulement.

D'autres exemples de l'état de la technique sont fournis par la thèse de doctorat de Marie Antier "Mesure interférométrique de phase et application à la combinaison cohérente d'un grand nombre de fibres amplificatrices", ainsi que dans les documents "Interferometric phase measurement techniques for coherent beam combining" de Antier et al., SPIE; "XCAN - A coherent amplification network of femtosecond fiber chirped-pulse amplifiers" de Daniault et al., The European Physical Journal; et "Collective synchronization and phase locking of fs fiber amplifiers: requirements and potential solutions" de Lombard et al., The European Physical Journal.

Le problème technique que l'on cherche à résoudre est donc de mesurer ces retards pour un grand nombre de canaux, avec une implémentation robuste, fiable, et de faible coût, cette mesure pouvant être mise en oeuvre dans une boucle de contre-réaction dynamique. Cette mesure des retards doit par ailleurs être compatible des architectures de mesures et de contrôle de phase optique nécessaire au verrouillage en phase des canaux optiques de la source.

L'invention proposée consiste à exploiter de manière originale des architectures collectives de mesure de phase optique par interférence avec une référence externe. La cartographie de retards entre les canaux de propagation du système est alors obtenue en plaçant une ligne à retard variable sur le canal de référence, puis en balayant ce retard tout en analysant la figure d'interférence produite sur le détecteur. La présence de franges à fort contraste indique la synchronisation d'une impulsion avec la référence. Dans le cas de franges d'interférence spatiales, la position spatiale sur le détecteur permet d'identifier le canal en question, et dans le cas de franges d'interférence temporelles, la fréquence des franges permet d'identifier le canal. Le balayage complet du retard sur la référence donne au final la cartographie complète du système et permet de synchroniser l'ensemble des impulsions en corrigeant le retard sur chaque canal, de la valeur mesurée.

Plus précisément l'invention a pour objet un procédé de mesure du retard entre N impulsions de durée inférieure à 100 picosecondes se propageant dans N canaux, qui comporte les étapes suivantes :

- émission collimatée de ces N impulsions de même fréquence de répétition,
- émission d'une impulsion de référence de même fréquence de répétition apte à produire des franges d'interférences avec chacune des N impulsions,
- pour chacune des N impulsions, détection par un détecteur de la somme cohérente de cette impulsion avec l'impulsion de référence, cette somme produisant lesdites franges d'interférences, les franges d'interférence provenant de chacune des N impulsions étant distinguables les unes des autres, soit spatialement, soit temporellement.

Il est principalement caractérisé en ce que l'impulsion de référence est émise avec un retard par rapport à des temps d'arrivée estimés des N impulsions sur le détecteur, ce retard étant ajustable sur une plage de retards déterminée, et en ce que le procédé comporte en outre les étapes suivantes :

- pour un retard de la plage de retards, mesure simultanée pour les N impulsions de N contrastes des franges d'interférences, cette mesure étant réitérée pour P autres retards de la dite plage, de manière à obtenir P.N autres contrastes de franges d'interférences,
- pour chacune des N impulsions, une valeur de retard entre cette impulsion et l'impulsion de référence est déterminée par le retard correspondant au contraste maximal parmi les P contrastes.

Le procédé selon l'invention utilise ainsi la visibilité (ou le contraste) de franges d'interférences comme critère de synchronisation entre les impulsions, ce qui a pour avantage d'une part de permettre une mise en oeuvre collective, et d'autre part d'utiliser les mêmes moyens de diagnostic que ceux utilisés par la suite pour le co-phasage des impulsions (verrouillage de la position des franges d'interférence).

Selon un premier mode d'exploitation, les N impulsions et l'impulsion de référence ont la même longueur d'onde (ou pulsation) centrale, la direction de propagation des N impulsions est différente de la direction de propagation de l'impulsion de référence et les franges d'interférences sont des franges d'interférences spatiales localisées en N zones distinctes du détecteur qui est un détecteur matriciel.

Selon un autre mode d'exploitation, les longueurs d'onde des N impulsions sont différentes entre elles et différentes de la longueur d'onde de l'impulsion de référence, et les franges d'interférences sont des franges d'interférences temporelles localisées en un même endroit du détecteur.

L'invention a aussi pour objet un système de mesure du retard entre N impulsions de durée inférieure à 100 picosecondes se propageant dans N canaux, qui comporte :

- N sources impulsionnelles configurées pour que les N impulsions se propagent selon des directions de propagation parallèles,
- un émetteur d'une impulsion de référence configuré pour que l'impulsion de référence se propage selon une direction de propagation inclinée par rapport à la direction de propagation des N impulsions, et associé à une ligne à retard ajustable, les N impulsions et l'impulsion de référence ayant la même longueur d'onde et la même fréquence de répétition,
- un détecteur matriciel,
- un dispositif d'imagerie configuré pour former sur le détecteur pour chacune des N impulsions, une somme cohérente de cette impulsion avec l'impulsion de référence, cette somme produisant des franges d'interférences spatiales.

Le système de mesure comporte en outre :

- un dispositif de redressement de la direction du plan d'onde de l'impulsion de référence par rapport à la direction de propagation des N impulsions qui comprend sur le trajet de l'impulsion de référence :

  ◦ un élément optique diffractif de compensation à réseau périodique,
  ◦ un montage optique à double transformée de Fourier et à grandissement prédéterminé, muni de deux lentilles et configuré pour que le plan du détecteur contienne le point focal image du montage optique, et que le plan de l'élément diffractif contienne le point focal objet,

- des moyens de mise en oeuvre du procédé de mesure décrit.

L'invention concerne également un système de mesure du retard entre N impulsions de durée inférieure à 100 picosecondes se propageant dans N canaux, qui comporte :

- N sources impulsionnelles configurées pour que les N impulsions se propagent selon des directions de propagation parallèles,
- un émetteur d'une impulsion de référence associé à une ligne à retard ajustable, les N impulsions et l'impulsion de référence ayant la même fréquence de répétition, mais des longueurs d'onde différentes,
- un détecteur sous forme de photodiode,
- un dispositif d'imagerie configuré pour former sur la photodiode pour chacune des N impulsions, une somme cohérente de cette impulsion avec l'impulsion de référence, cette somme produisant des franges d'interférences temporelles,

caractérisé en ce qu'il comporte des moyens de mise en oeuvre du procédé de mesure décrit correspondant.

L'invention a aussi pour objet un système de verrouillage de phase et de synchronisation de N sources impulsionnelles de durée inférieure à 100 picosecondes qui comporte :

- N sources impulsionnelles de même fréquence de répétition respectivement munies de modulateurs de phase,
- un émetteur d'une impulsion de référence de même fréquence de répétition, équipé d'une ligne à retard ajustable,
- un détecteur,
- un dispositif d'imagerie configuré pour former sur le détecteur pour chacune des N impulsions, une somme cohérente de cette impulsion avec l'impulsion de référence, cette somme produisant des franges d'interférences,
- une boucle à verrouillage de phase qui comporte :

  ◦ des moyens de calcul des déphasages entre chaque source et l'émetteur de l'impulsion de référence,
  ◦ des moyens de pilotage des modulateurs de phase en fonction des déphasages,

caractérisé en ce qu'il comprend en outre :

- une ligne à retard variable associée à chaque source,
- une boucle à verrouillage de retard qui comporte :

  ◦ un système de mesure du retard entre les entre N impulsions tel que décrit,
  ◦ des moyens de pilotage des lignes à retard des N sources en fonction des retards mesurés.

Ce système permet ainsi de compenser de manière dynamique les retards introduits sur un grand nombre N de faisceaux laser par la propagation à travers un ensemble de milieux à gain (amplificateurs fibrés par exemple) mis en parallèle. Une fois synchronisés et verrouillés en phase, les N faisceaux laser émergents interfèrent constructivement et constituent ainsi une source de luminance N fois supérieure à celle d'un amplificateur élémentaire, tout en gardant sa qualité de faisceau (limitée par diffraction dans le cas de fibres monomodes par exemple).

D'autres caractéristiques et avantages de l'invention apparaîtront à la lecture de la description détaillée qui suit, faite à titre d'exemple non limitatif et en référence aux dessins annexés dans lesquels :

la figure 1 illustre schématiquement une étape du procédé de mesure selon l'invention, mis en oeuvre dans une configuration où le faisceau de référence est incliné par rapport aux faisceaux à caractériser,
la figure 2 illustre schématiquement plusieurs itérations de l'étape de la figure 1 selon l'invention, avec la même configuration,
la figure 3 montre différentes étapes d'un exemple de calcul de la visibilité des franges,
la figure 4 représente schématiquement un exemple de système de verrouillage de phase et de synchronisation selon l'invention,
la figure 5a illustre une erreur de mesure, et la figure 5b la correction de cette erreur de mesure,
la figure 6 représente schématiquement un exemple de montage optique de redressement de l'impulsion de référence.

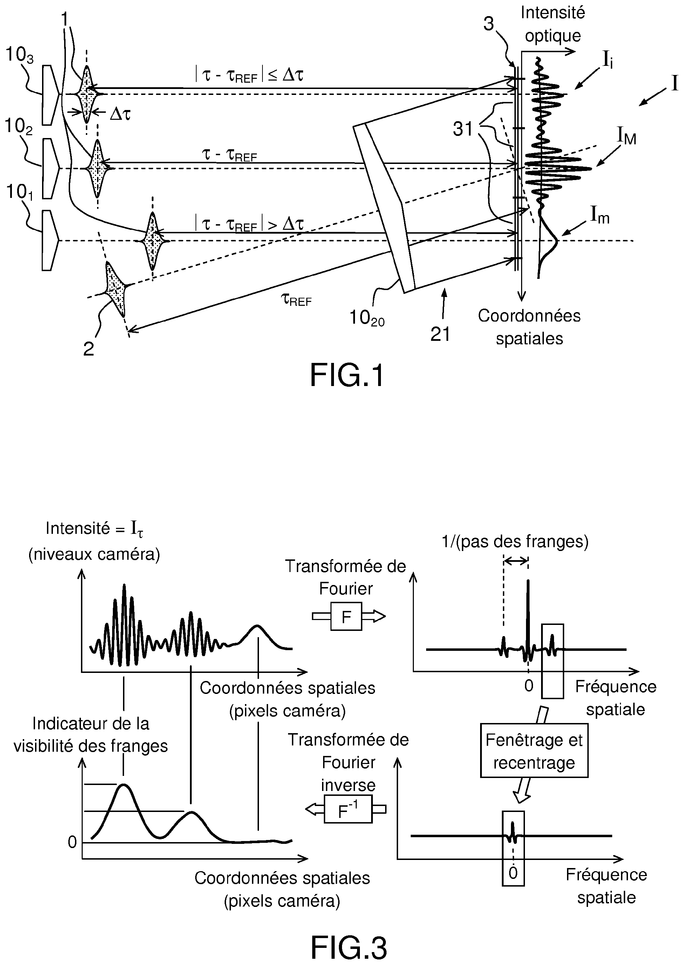

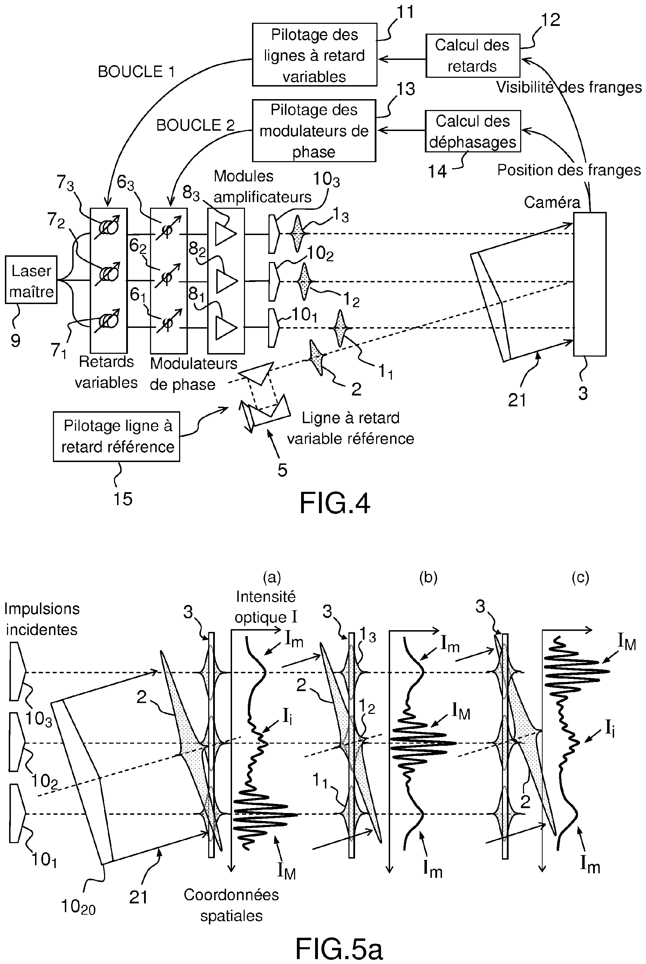

D'une figure à l'autre, les mêmes éléments sont repérés par les mêmes références.
Dans la suite de la description, les expressions « haut », « bas », sont utilisées en référence à l'orientation des figures décrites. Dans la mesure où les systèmes peut être positionnés selon d'autres orientations, la terminologie directionnelle est indiquée à titre d'illustration et n'est pas limitative.
La solution apportée reprend comme base l'architecture de mesure de phase collective par technique interférométrique telle que décrite dans la publication : « Collective coherent phase combining of 64 fibers » J. Bourderionnet et al, Opt Express. 19. Dans cette architecture, les déphasages optiques entre les canaux de propagation sont obtenus par analyse des réseaux de franges d'interférence entre chacun des faisceaux optiques avec une référence commune. Les franges sont enregistrées collectivement sur une caméra, de sorte que tous les déphasages sont enregistrés en une seule image. En régime impulsionnel, les impulsions qui ne sont pas synchronisées, c'est-à-dire qui ne sont pas présentes simultanément dans le plan du capteur de la caméra, ne produiront pas d'interférences. La mesure est alors impossible.
On décrit en relation avec la figure 1 un exemple de mise en oeuvre de ce procédé de mesure collective. Les impulsions 1 à caractériser sont supposées collimatées, et de même direction de propagation ; trois impulsions à caractériser sont représentées sur la figure. Une impulsion de référence 2 est étendue en onde plane et se propage dans une direction non parallèle à celle des impulsions à caractériser. Toutes les impulsions 1 et 2 sont supposées cohérentes (pour pouvoir obtenir des franges d'interférences), et de même fréquence de répétition (elles sont typiquement issues du même oscillateur maître 9 montré figure 4). Le faisceau de référence 21 recouvre spatialement l'ensemble des faisceaux à caractériser au niveau du détecteur 3 tel qu'une caméra de mesure. La caméra enregistre donc la somme de chaque impulsion 1 avec l'impulsion de référence 2. Cet enregistrement est résolu spatialement, c'est-à-dire que chaque impulsion à caractériser est attribuée à une zone 31 bien déterminée de la caméra : les impulsions à caractériser ne se recouvrent pas spatialement.

De préférence, l'intensité optique de la référence 2 est ajustée de manière à être égale au niveau d'intensité des impulsions 1 à caractériser, de manière à optimiser les phénomènes d'interférence. Lorsqu'une des impulsions 1 à caractériser est parfaitement synchrone avec l'impulsion de référence 2 ($\tau = \tau_{REF}$), la caméra enregistre une figure d'interférence $I_M$ parfaitement développée, de période spatiale donnée par l'angle entre les directions de propagation du faisceau de référence et des faisceaux à caractériser. Si les impulsions ne se recouvrent pas temporellement ($|\tau - \tau_{REF}| > \Delta\tau$, avec $\Delta\tau$ la largeur temporelle des impulsions), alors on a une sommation incohérente $I_m$ et on n'observe pas de franges d'interférence. Pour les situations intermédiaires pour lesquelles $|\tau - \tau_{REF}| \leq \Delta\tau$, on observe des interférences $I_i$ mais avec un contraste diminué.

On applique ce principe de mesure à un ensemble de N faisceaux lasers impulsionnels collimatés, disposés selon un arrangement à 1 ou 2 dimensions. La caméra de contrôle 3 enregistre une image I de cet arrangement, de sorte que chacun des N faisceaux corresponde à une zone spatiale 31 distincte du détecteur. Selon l'invention, une ligne à retard variable 5 est placée sur la voie de référence, incidente elle aussi sur la caméra de contrôle 3, et faisant un angle $\theta$ avec les faisceaux à synchroniser.

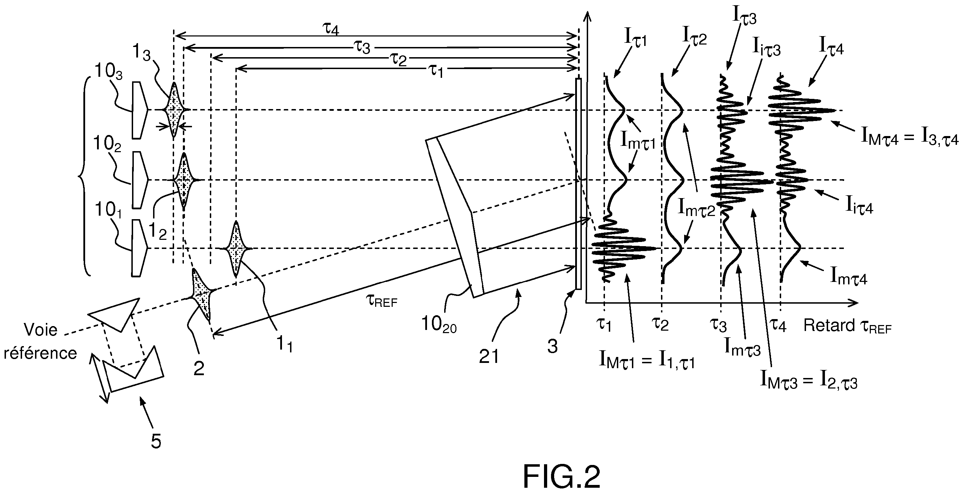

La cartographie des retards relatifs entre les N faisceaux lasers est alors obtenue en balayant la course de la ligne à retard 5 de la voie référence, et en mesurant simultanément la présence de franges d'interférence sur l'image d'intensité I sur la caméra 3, comme illustré sur la figure 2. La course de la ligne à retard variable doit être au minimum égale au retard maximal à sonder ; elle varie dans une plage de retards prédéterminée, typiquement égale à 10 cm pour des impulsions de durée inférieure à 100 picosecondes.

Pour chaque retard un enregistrement simultané I de la superposition spatiale des impulsions est réalisé sur la caméra 3. La présence d'interférences sur l'image de la caméra indique qu'une impulsion 1 est synchrone avec la référence 2, et la position spatiale 31 du jeu de franges permet la localisation et l'identification du canal de propagation synchronisé. En procédant ainsi jusqu'à avoir visualisé les franges d'interférence pour chacun des canaux, on obtient la mesure de tous les retards relatifs du système, que l'on peut alors compenser.

A l'issue de cette étape, on a une image I $\tau$ par valeur de retard $\tau$ ($\tau1$, $\tau2$, $\tau3$, $\tau4$ dans l'exemple de la figure) de la voie de référence, chaque image ($I\tau1$, $I\tau2$, $I\tau3$, $I\tau4$ dans l'exemple de la figure) contenant l'addition cohérente (impulsions simultanées : $I_M\tau1$, $I_M\tau3$, $I_M\tau4$ dans l'exemple de la figure), ou incohérentes (impulsions décalées temporellement : $I_m\tau1$, $I_m\tau2$, $I_m\tau3$, $I_m\tau4$ dans l'exemple de la figure) de chaque impulsion incidente $1_1$, $1_2$, $1_3$ avec l'impulsion de référence 2. Pour les situations intermédiaires, on observe des franges d'interférence avec un contraste diminué ($I_i\tau3$, $I_i\tau4$ dans l'exemple de la figure).

Le retard de l'impulsion 1 par rapport à la référence 2 est alors donné par le maximum de visibilité des franges d'interférence sur l'ensemble des images $I\tau$ obtenues lors du balayage de la ligne à retard 5 de la référence ($I\tau1$, $I\tau2$, $I\tau3$, $I\tau4$ dans l'exemple de la figure), c'est-à-dire par :

- le retard $\tau1$ pour l'impulsion $1_1$,
- le retard $\tau3$ pour l'impulsion $1_2$,
- le retard $\tau4$ pour l'impulsion $1_3$.

Le critère de synchronisation des impulsions, qui correspond à un maximum de visibilité des franges, peut alors être obtenu par différentes méthodes, plus ou moins simples, et plus ou moins robustes. On considère tout d'abord chaque image $I_\tau$ comme étant subdivisée en N images $I_{\tau,k}$ respectivement centrées sur les N impulsions $1_k$ à caractériser (k varie de 1 à N).

- On peut alors par exemple calculer le minimum d'intensité $I_m$ pour chaque sous-image $I_{\tau,k}$. La valeur minimale la plus basse indique le maximum d'interférence entre l'impulsion $1_k$ et la référence 2, donc une synchronisation optimale. On peut également rechercher le maximum d'intensité $I_M$ en plus du minimum, ce qui donne accès au contraste des franges.

- Une autre méthode, demandant plus de calcul mais avec un meilleur rapport signal sur bruit, est illustrée sur la figure 3. Pour chaque image $I_{\tau,k}$, la visibilité des franges peut être estimée par la densité spectrale de puissance de l'image à la fréquence $v_0$ des franges d'interférence. On traite une image $I_\tau$ dans son ensemble en procédant comme suit :

- On calcule $\mathcal{H}_\tau = \mathcal{F}(I_\tau)$, F étant la transformée de Fourier,
  - On isole les contributions autour de la fréquence des franges d'interférences, et on les recentre autour de la fréquence nulle :

$$\widetilde{\mathcal{H}}_\tau([-\delta\nu; +\delta\nu]) = \mathcal{H}_\tau([\nu_0 - \delta\nu; \nu_0 + \delta\nu])$$
$$\nu \notin [-\delta\nu; +\delta\nu] : \quad \widetilde{\mathcal{H}}_\tau(\nu) = 0$$

  - On récupère une image de visibilité des franges en calculant la transformée de Fourier inverse F$^{-1}$ de :

$$\Upsilon_\tau = \mathcal{F}^{-1}(\widetilde{\mathcal{H}}_\tau)$$

Au final, ces diverses méthodes quantifient la visibilité $\Upsilon$ des franges en fonction du retard $\tau$ de la référence 2, et pour chaque impulsion $1_k$ à caractériser. Le retard $\tau_k$ de l'impulsion 1 indexée $k$ par rapport à la référence est alors donné par le maximum de visibilité des franges d'interférence lors du balayage de la ligne à retard de la référence:

$$\tau_k = \max_\tau [\Upsilon(\tau, k)]$$

Cette cartographie de retards permet au final d'ajuster des lignes à retard $7_k$ (montrées figure 4) présentes sur chacune des voies $k$ de manière égaliser tous les $\tau_k$.

Le schéma de la figure 4 illustre un exemple d'utilisation de l'invention dans une chaîne complète de sources laser impulsionnelles selon la technologie de réseaux d'amplificateurs cohérents (CAN). Selon ce schéma, l'oscillateur maître 9 est divisé en N voies (N=3 dans l'exemple de la figure). Chacune de ces voies comporte un moyen d'ajustement du retard optique (tel qu'une ligne à retard ajustable $7_1$, $7_2$, $7_3$ pilotée par des moyens 11 de pilotage des lignes à retard) pour la synchronisation des impulsions $1_1$, $1_2$, $1_3$, et un moyen de contrôle de la phase optique (tel qu'un modulateur de phase $6_1$, $6_2$, $6_3$ piloté par des moyens 13 de pilotage des modulateurs de phase) pour le co-phasage des impulsions $1_1$, $1_2$, $1_3$. Chaque canal est ensuite amplifié par un module amplificateur $8_1$, $8_2$, $8_3$, avant de sortir en espace libre vers une optique de collimation, typiquement une matrice de micro-lentilles $10_1$, $10_2$, $10_3$. Selon le schéma de la figure 4, la partie diagnostic du système comporte un détecteur 3 tel qu'une caméra, sur laquelle sont incidentes les impulsions laser $1_1$, $1_2$, $1_3$ et une voie de référence, (avec une lentille de collimation $10_{20}$), laquelle comporte également une ligne à retard variable 5, de course suffisamment grande. Une première boucle d'asservissement est alors définie par le cycle suivant :

- On fait varier le retard de la voie de référence 2 par exemple par pas prédéterminé de l'ordre de la largeur des impulsions par des moyens 15 de pilotage de cette ligne à retard 5, et on mesure la cartographie des retards du système par des moyens 12 de calcul des retards, en exploitant la visibilité des franges d'interférence comme décrit précédemment.
- Les lignes à retard de chaque voie $7_1$, $7_2$, $7_3$ sont ajustées (par les moyens 11 de pilotage commandés par les moyens de calcul 12), de manière à égaliser les retards sur chaque voie et ainsi synchroniser toutes les impulsions $1_1$, $1_2$, $1_3$.

Les moyens 15 de pilotage de la ligne à retard 5 de l'émetteur de l'impulsion de référence sont éventuellement eux-mêmes pilotés en fonction des retards mesurés.

Cette première boucle peut être mise en oeuvre avec une fréquence potentiellement très lente, selon la rapidité de dérive des retards du système : toutes les minutes par exemple.

Comme décrit dans la publication « Collective coherent phase combining of 64 fibers » J. Bourderionnet et al, Opt Express. 19, une 2ème boucle d'asservissement est alors mise en oeuvre pour verrouiller les phases optiques des impulsions. Lorsque la 1ère boucle est fermée c'est-à-dire lorsque les impulsions sont synchronisées, cette 2ème boucle utilise la dernière image caméra obtenue en fin de 1ère boucle d'asservissement avec de nouvelles images pour la mesure de la cartographie des phases relatives. On mesure la cartographie des déphasages du système par des moyens 14 de calcul des déphasages, en exploitant cette fois les positions relatives des franges d'interférence, puis on ajuste les modulateurs de phase $6_1$, $6_2$, $6_3$ par les moyens de pilotage 13 commandés par les moyens de calcul 14.

On a indiqué que l'impulsion de référence 2 se propage selon une direction $\theta$ faisant un angle non nul avec les directions de propagation des impulsions 1 à synchroniser, et ce pour pouvoir visualiser des franges d'interférence sur la caméra de contrôle. La figure 5a montre une erreur systématique produite par le système tel que décrit ci-dessus :

pour des impulsions incidentes $1_1$, $1_2$, $1_3$ parfaitement synchronisées, on voit que le maximum de contraste sur les franges d'interférence $I_M$ n'est pas obtenu pour une même valeur de retard sur la voie référence (comme cela devrait être le cas pour des impulsions synchronisées) :

- en (a) on a l'image I obtenue lorsque le bas de l'impulsion de référence 2 est en phase et synchronisé avec l'impulsion $1_1$ (mais pas avec les impulsions $1_2$ et $1_3$) dans le plan focal de la caméra 3,
- en (b) on a l'image I obtenue lorsque le milieu de l'impulsion de référence 2 est en phase et synchronisé avec l'impulsion $1_2$ (mais pas avec les impulsions $1_1$ et $1_3$) dans le plan focal de la caméra 3,
- en (c) on a l'image I obtenue lorsque le haut de l'impulsion de référence 2 est en phase et synchronisé avec l'impulsion $1_3$ (mais pas avec les impulsions $1_1$ et $1_2$) dans le plan focal de la caméra 3.

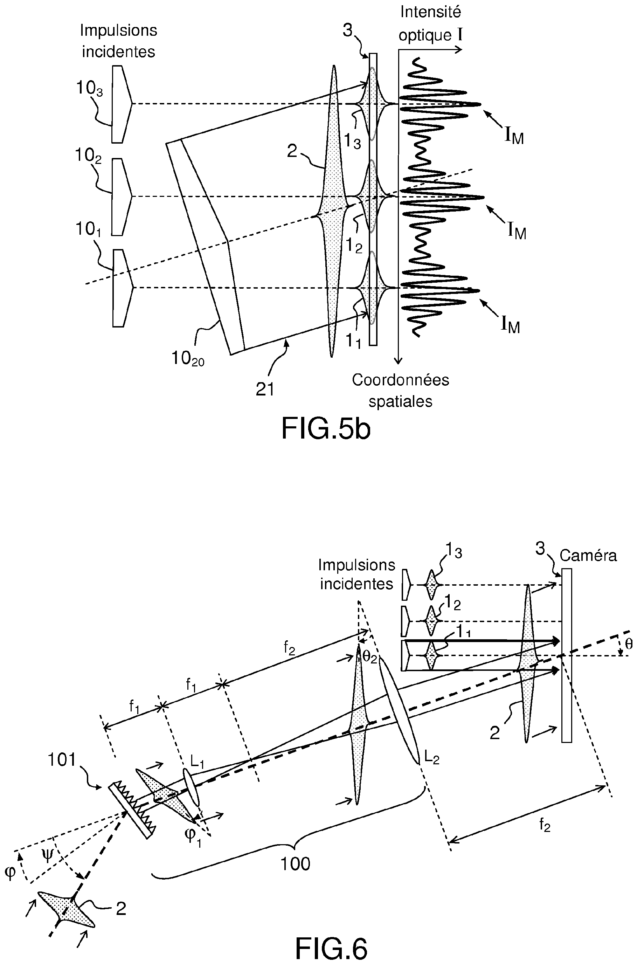

Pour pallier ce problème, l'angle $\theta$ entre les directions de propagation des impulsions 1 à synchroniser et celle de l'impulsion de référence 2 doit être obtenu en maintenant les fronts de propagation de l'énergie parallèles, comme illustré sur la figure 5b. Cette condition peut être réalisée en utilisant un montage 100 de redressement de l'impulsion de référence 2 comme celui détaillé sur la figure 6. On utilise un élément optique diffractif de compensation à réseau périodique 101 pour ajuster indépendamment la direction de propagation de l'impulsion de référence 2 et le front de propagation de l'énergie (c'est-à-dire la répartition spatiale de l'énergie de l'impulsion à un instant donné). Un montage optique d'imagerie à double transformée de Fourier et à grandissement prédéterminé, muni de deux lentilles L1 et L2 et configuré pour que le plan focal du détecteur 3 contienne le point focal image du montage et que le plan de l'élément diffractif 101 contienne le point focal objet, permet alors de compenser la dispersion chromatique du réseau de diffraction 101, de sorte que la position des franges d'interférence sur la caméra 3 soit indépendante de la longueur d'onde. Plus précisément, l'ensemble diffractif de redressement 101 est imagé sur la caméra 3 par un dispositif d'imagerie. Ce dispositif d'imagerie comprend :

- une lentille L1 de focale $f_1$ et
- une lentille L2 de focale $f_2$.

Ces 2 lentilles forment un montage à double TF de grandissement prédéterminé $\gamma$, apte à imager l'ensemble optique diffractif de redressement 101 sur la caméra 3 : l'ensemble optique diffractif de redressement 101 est situé dans le plan objet de la lentille L1, la caméra 3 étant située dans le plan image de la lentille L2, le plan image de la lentille L1 coïncidant avec le plan objet de la lentille L2.

Les faisceaux optiques issus des sources lasers impulsionnelles $S_k$ sont collimatés en amont du système (elles sont situées par exemple dans un plan et collimatées par une lentille) et chaque faisceau forme avec le faisceau de référence issu de L2 un angle spécifique θ sur la caméra 3. On choisit l'angle θ pour obtenir un pas de frange d'interférence $\Lambda$ adapté à la résolution de la caméra (typiquement 1frange -> ~10 pixels). L'ensemble diffractif de redressement 101 comporte un réseau de phase et/ou d'amplitude périodique de pas $\Lambda_{101}$. Le pas $\Lambda_{101}$ est calculé en fonction de l'angle d'incidence ψ du faisceau de référence incident sur le DOE de redressement 101 et de l'angle d'inclinaison φ du DOE de compensation sur l'axe z (axe optique des lentilles L2 et L1).

Pour que les répartitions spatiales d'énergie des impulsions incidentes sur la caméra 3 soient parallèles à la répartition spatiale d'énergie du faisceau de référence, l'angle d'inclinaison (dans le plan xOz) de la répartition d'énergie de la référence avant la lentille L2 doit valoir $\theta_2$. Le dispositif d'imagerie constitué des lentilles L1 et L2, de grandissement $\gamma = -f_2/f_1$, impose alors la condition suivante sur l'angle d'inclinaison de la répartition spatiale d'énergie $\varphi_1$ en sortie du DOE de redressement 101 :

$$\tan(\varphi_1) = \gamma \tan(\theta_2)$$

D'autre part, on considère que le DOE de redressement 101 comporte un réseau de pas uniforme $\Lambda_{101}$, et que sa normale est inclinée d'un angle φ par rapport à l'axe optique du dispositif d'imagerie constitué des lentilles L1 et L2. On désigne par ψ l'angle entre la direction d'incidence de la source de référence et l'axe optique du dispositif d'imagerie constitué des lentilles L1 et L2. Enfin $\varphi_1$ désigne l'angle en sortie de DOE de redressement 101, entre la répartition spatiale d'énergie de l'impulsion et l'axe de propagation de l'impulsion. Les angles φ, ψ et $\varphi_1$ sont reliés par :

$$\tan(\varphi 1) = \frac{\sin(\psi - \varphi)}{\cos(\varphi)} + \tan(\varphi)$$

L'optimisation du recouvrement spatial des impulsions au niveau du DOE de redressement implique :

$$\frac{\sin(\psi - \varphi)}{\cos(\varphi)} + \tan(\varphi) = \gamma \tan(\theta_2)$$

Ce qui donne une première relation entre les paramètres dimensionnant le système :

le pas des franges choisi au niveau de la caméra,
la longueur d'onde centrale des impulsions $\lambda_0$,
le grandissement $\gamma$ du dispositif d'imagerie,

D'autre part, le pas $\Lambda_{101}$ du réseau de redressement 101 est établi en fonction de la direction d'incidence $\psi$, de la direction d'inclinaison du réseau, et de la longueur d'onde $\lambda_0$ par :

$$\Lambda_{101} = \frac{\lambda_0}{\sin(\psi - \varphi) + \sin(\varphi)}$$

Au final, l'optimisation du recouvrement spatial des impulsions au niveau de la caméra 3 est assurée au moyen du système décrit sur la figure 6 si les relations suivantes entre les paramètres du système sont vérifiées :

$$\begin{cases} \dfrac{\sin(\psi - \varphi)}{\cos(\varphi)} + \tan(\varphi) = \gamma \tan(\theta_2) \\ \Lambda_{101} = \dfrac{\lambda_0}{\sin(\psi - \varphi) + \sin(\varphi)} \end{cases}$$

Soit :

$$\begin{cases} \dfrac{\sin(\psi - \varphi)}{\cos(\varphi)} + \tan(\varphi) = \gamma \tan(\theta_2) \\ \Lambda_{101} = \dfrac{\lambda_0}{\gamma \tan(\theta_2)\cos(\varphi)} \end{cases}$$

On considère à présent la compensation de la dispersion chromatique du DOE de redressement 101.

Le pas $\Lambda$ des franges d'interférence au niveau de la caméra 3 dépend de la longueur d'onde $\lambda_0$ et de l'angle $\theta_2$ entre la référence et les impulsions 1 au niveau de la caméra 3 selon :

$$\Lambda = \frac{\lambda_0}{\sin(\theta_2)}$$

Avec $\theta_2$ l'angle du faisceau de référence à la longueur d'onde centrale $\lambda_0$ avec les impulsions 1. On considère un faisceau de référence à une longueur d'onde $\lambda_0 + \delta\lambda_0$. Ce faisceau forme un angle $\theta_2 + \delta\theta_2$ avec les impulsions 1. La condition de compensation de dispersion chromatique impose que le pas des franges A soit indépendant de la longueur d'onde, soit:

$$\delta\theta_2 = \frac{\delta\lambda}{\lambda_0}\tan(\theta_2)$$

Et donc :

$$\frac{\partial \theta_2}{\partial \lambda} = \frac{\tan(\theta_2)}{\lambda_0}$$

De même, pour le DOE de redressement 101 on a vu que le pas du réseau de compensation $\Lambda_{101}$ est établi en fonction de la direction d'incidence $\psi$, de la direction d'inclinaison du réseau, et de la longueur d'onde $\lambda_0$ par :

$$\Lambda_{101} = \frac{\lambda_0}{\sin(\psi - \varphi) + \sin(\varphi)}$$

Le calcul de l'écart angulaire $\delta\psi$ entre les vecteurs d'onde diffractés par le DOE de redressement 101 aux longueurs d'onde $\lambda_0$ et à $\lambda_0 + \delta\lambda_0$ donne :

$$\delta\psi = \frac{\delta\lambda}{\lambda_0}\left(\frac{\sin(\psi)}{\cos(\varphi)} + \tan(\varphi)\right)$$

La dispersion angulaire du DOE de redressement 101 vaut donc :

$$\frac{\delta\psi}{\delta\lambda} = \frac{1}{\lambda_0}\left(\frac{\sin(\psi)}{\cos(\varphi)} + \tan(\varphi)\right)$$

La condition de compensation chromatique se déduit du calcul du grandissement angulaire du dispositif d'imagerie décentré de grandissement transverse $\gamma$ tel que celui du système décrit en figure 6. On obtient donc la condition suivante :

$$\frac{\delta\theta_2}{\delta\lambda} = \frac{1}{\gamma(1 + \tan^2(\theta_2))}\frac{\delta\psi}{\delta\lambda}$$

Au final, la compensation de la dispersion chromatique du DOE de redressement 101 est assurée au moyen du dispositif décrit sur la figure 6 si les relations suivantes sont vérifiées :

$$\begin{cases} \Lambda_{101} = \dfrac{\lambda_0}{\sin(\psi - \varphi) + \sin(\varphi)} \\[2em] \gamma\tan(\theta_2)(1 + \tan^2(\theta_2)) = \tan(\varphi) + \dfrac{\sin(\psi)}{\cos(\varphi)} \end{cases}$$

Selon les conditions établies dans les sections précédentes, le redressement de l'impulsion de référence et la compensation de la dispersion chromatique du DOE de redressement 101 est assurée au moyen du dispositif décrit sur la figure 6 si les relations suivantes sont vérifiées :

$$\Lambda_{101} = \frac{\lambda_0}{\sin(\psi - \varphi) + \sin(\varphi)}$$

$$\gamma\tan(\theta_2)(1 + \tan^2(\theta_2)) = \tan(\varphi) + \frac{\sin(\psi)}{\cos(\varphi)}$$

$$\frac{\sin(\psi - \varphi)}{\cos(\varphi)} + \tan(\varphi) = \gamma \tan(\theta_2)$$

Jusqu'à présent on a considéré que les N impulsions à caractériser et l'impulsion de référence avaient la même longueur d'onde centrale et que la direction de propagation de l'impulsion de référence était différente de celle des N impulsions. On obtient alors des franges d'interférences qui sont spatialement distinguables entre elles : ce sont des franges d'interférences spatiales non localisées au même endroit du détecteur, qui est typiquement un détecteur matriciel.

Le procédé de mesure et les systèmes de mesure et de verrouillage de phase et de synchronisation s'appliquent également au cas de N impulsions $1_k$ de longueurs d'onde différentes entre elles et différentes de celle de l'impulsion de référence 2. Elles sont soit de longueurs d'onde centrales identiques et modulées en phase à des fréquences $f_k$ distinctes et non multiples, soit légèrement décalées les unes des autres, d'un écart en longueur d'onde $\frac{\lambda_0{}^2}{c} f_k$ avec $\lambda_0$ la longueur d'onde centrale de l'impulsion de référence et c égal à $3.10^8$ m/s. L'impulsion de référence est également soit modulée en phase à la fréquence $f_R$, soit décalée en longueur d'onde de $\frac{\lambda_0{}^2}{c} f_R$. Les N impulsions et l'impulsion de référence ont par exemple la même direction de propagation, et sont focalisées par un système d'imagerie en un même point du détecteur où l'on obtient alors des franges d'interférences temporelles, ou battement, à des fréquences combinaisons linéaires des $f_k$ et $f_R$. Ces franges d'interférences temporelles, ou produits de battement, sont enregistrées par un détecteur 3 suffisamment rapide par rapport à l'écart en longueur d'onde entre les impulsions (suffisamment rapide pour détecter les battements de chacune des impulsions avec l'impulsion de référence). Ce détecteur est typiquement une photodiode. Le montage de redressement de l'impulsion de référence devient éventuellement superflu, car dans ce cas, les impulsions à synchroniser et l'impulsion de référence peuvent avoir la même direction de propagation (plus besoin d'angle pour faire apparaître des franges spatiales), et donc des fronts de propagation d'énergie parallèles. Dans le cas de l'utilisation d'une photodiode, l'identification des impulsions se fait par un marquage en fréquence des impulsions. Le mélange de l'impulsion de référence 2 avec l'impulsion $1_k$ modulée ou décalée, produit des franges d'interférences temporelles à des fréquences combinaisons linéaires de toutes les $f_0...f_N$ et $f_R$, parmi lesquelles une composante à la fréquence $f_k$-$f_R$ propre à l'impulsion $1_k$. Pour chacune des impulsions $1_k$, k de 1 à N, une mesure du contraste des franges temporelles est alors obtenue par démodulation du signal de la photodiode à la fréquence $f_k$-$f_R$.

Les moyens de calcul des déphasages et des retards et les moyens de pilotage des modulateurs de phase et des lignes à retard peuvent notamment s'implémenter à partir d'un produit programme d'ordinateur, ce programme d'ordinateur comprenant des instructions de code permettant d'effectuer les étapes de calcul et de pilotage. Il est enregistré sur un support lisible par ordinateur relié au détecteur 3. Le support peut être électronique, magnétique, optique, électromagnétique ou être un support de diffusion de type infrarouge. De tels supports sont par exemple, des mémoires à semiconducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de mesure du retard entre N impulsions (1) de durée inférieure à 100 picosecondes se propageant dans N canaux, qui comporte les étapes suivantes :

   - émission collimatée de ces N impulsions ($1_k$) de même fréquence de répétition,
   - émission d'une impulsion de référence (2) de même fréquence de répétition apte à produire des franges d'interférences avec chacune des N impulsions,
   - pour chacune des N impulsions, détection par un détecteur (3) de la somme cohérente de cette impulsion ($1_k$) avec l'impulsion de référence (2), cette somme produisant lesdites franges d'interférences, les franges d'interférences provenant de chacune des N impulsions étant distinguables les unes des autres,

   **caractérisé en ce que** l'impulsion de référence (2) est émise avec un retard par rapport à des temps d'arrivée estimés des N impulsions sur le détecteur (3), ce retard étant ajustable sur une plage de retards déterminée, et **en**

**ce que** le procédé comporte en outre les étapes suivantes :

- pour un retard de la plage de retards, mesure simultanée pour les N impulsions de N contrastes des franges d'interférences, cette mesure étant réitérée pour P autres retards de la dite plage, de manière à obtenir P x N autres contrastes de franges d'interférences,
- pour chacune des N impulsions, une valeur de retard entre cette impulsion ($1_k$) et l'impulsion de référence (2) est déterminée par le retard correspondant au contraste maximal parmi les P contrastes.

2. Procédé de mesure du retard entre N impulsions selon la revendication précédente, **caractérisé en ce que** les N impulsions ($1_k$) et l'impulsion de référence (2) ont la même longueur d'onde centrale, la direction de propagation des N impulsions ($1_k$) est différente de la direction de propagation de l'impulsion de référence (2) et **en ce que** les franges d'interférences sont des franges d'interférences spatiales localisées en N zones distinctes (31) du détecteur.

3. Procédé de mesure du retard entre N impulsions selon la revendication 1, **caractérisé en ce que** les longueurs d'onde centrales des N impulsions ($1_k$) sont différentes entre elles et différentes de la longueur d'onde centrale de l'impulsion de référence (2) et **en ce que** les franges d'interférences sont des franges d'interférences temporelles localisées en un même endroit du détecteur (3).

4. Système de mesure du retard entre N impulsions (1) de durée inférieure à 100 picosecondes se propageant dans N canaux, qui comporte :

- N sources impulsionnelles configurées pour que les N impulsions ($1_k$) se propagent selon des directions de propagation parallèles,
- un émetteur d'une impulsion de référence (2) configuré pour que l'impulsion de référence se propage selon une direction de propagation inclinée par rapport à la direction de propagation des N impulsions, et associé à une ligne à retard ajustable (5), les N impulsions et l'impulsion de référence ayant la même longueur d'onde centrale et la même fréquence de répétition,
- un détecteur matriciel (3),
- un dispositif d'imagerie configuré pour former sur le détecteur (3) pour chacune des N impulsions, une somme cohérente de cette impulsion avec l'impulsion de référence, cette somme produisant des franges d'interférences spatiales,

**caractérisé en ce qu'**il comporte en outre :

- un dispositif (100) de redressement de la direction du plan d'onde de l'impulsion de référence (2) par rapport à la direction de propagation des N impulsions ($1_k$) qui comprend sur le trajet de l'impulsion de référence (2) :

o un élément (101) optique diffractif de compensation à réseau périodique,
o un montage optique à double transformée de Fourier et à grandissement prédéterminé, muni de deux lentilles (L1, L2) et configuré pour que le plan du détecteur (3) contienne le point focal image du montage optique, et que le plan de l'élément diffractif (101) contienne le point focal objet,

- des moyens de mise en oeuvre du procédé de mesure selon la revendication 1 ou 2.

5. Système de mesure du retard entre N impulsions ($1_k$) de durée inférieure à 100 picosecondes se propageant dans N canaux, qui comporte :

- N sources impulsionnelles configurées pour que les N impulsions ($1_k$) se propagent selon des directions de propagation parallèles,
- un émetteur d'une impulsion de référence (2) associé à une ligne à retard ajustable (5), les N impulsions et l'impulsion de référence ayant la même fréquence de répétition, mais des longueurs d'onde centrales différentes,
- un détecteur sous forme de photodiode (3),
- un dispositif d'imagerie configuré pour former sur la photodiode (3) pour chacune des N impulsions, une somme cohérente de cette impulsion avec l'impulsion de référence, cette somme produisant des franges d'interférences temporelles,

**caractérisé en ce qu'**il comporte des moyens de mise en oeuvre du procédé de mesure selon la revendication 1 ou 3.

6. Système de verrouillage de phase et de synchronisation de N sources impulsionnelles de durée inférieure à 100 picosecondes qui comporte :

   - N sources impulsionnelles de même fréquence de répétition respectivement munies de modulateurs de phase (6),
   - un émetteur d'une impulsion de référence (2) de même fréquence de répétition, équipé d'une ligne à retard ajustable (5),
   - un détecteur (3),
   - un dispositif d'imagerie configuré pour former sur le détecteur pour chacune des N impulsions $(1_k)$, une somme cohérente de cette impulsion avec l'impulsion de référence, cette somme produisant des franges d'interférences,
   - une boucle à verrouillage de phase (boucle 2) qui comporte :

     o des moyens (14) de calcul des déphasages entre chaque source et l'émetteur de l'impulsion de référence,
     o des moyens (13) de pilotage des modulateurs de phase (6) en fonction des déphasages,

   **caractérisé en ce qu'**il comprend en outre :

   - une ligne à retard variable (7) associée à chaque source,
   - une boucle à verrouillage de retard (boucle 1) qui comporte :

     o un système de mesure du retard entre les entre N impulsions selon l'une des revendications 4 ou 5,
     o des moyens (11) de pilotage des lignes à retard des N sources en fonction des retards mesurés.

7. Un produit programme d'ordinateur, ledit programme d'ordinateur comprenant des instructions de code permettant d'effectuer les étapes du procédé selon l'une quelconque des revendications 1 à 3, lorsque ledit programme est exécuté sur un ordinateur.


## Patentansprüche

1. Verfahren zur Messung der Verzögerung zwischen N Impulsen (1) mit einer Laufzeit kleiner als 100 Picosekunden, die sich in N Kanälen ausbreiten, umfassend die Schritte:

   - kollimiertes Emittieren der N Impulse $(1_k)$ mit gleicher Wiederholungsfrequenz,
   - Emittieren eines Referenzimpulses (2) mit einer Wiederholungsfrequenz, die dazu geeignet ist, mit jedem der N Impulse Interferenzstreifen zu erzeugen,
   - für jeden der N Impulse: Erkennen der zusammenhängenden Summe dieses Impulses $(1_k)$ und des Referenzimpulses (2) durch einen Detektor, wobei diese Summe die Interferenzstreifen erzeugt, wobei die Interferenzstreifen von jedem der N Impulse, die sich voneinander unterscheiden lassen, herrühren,

   **dadurch gekennzeichnet, dass** der Referenzimpuls (2) mit einer Verzögerung gegenüber den geschätzten Ankunftszeiten der N Impulse am Detektor (3) emittiert wird, wobei diese Verzögerung in einem vorgegebenen Verzögerungsbereich einstellbar ist, und dass das Verfahren ferner folgende Schritte umfasst:

   - für eine Verzögerung aus dem Verzögerungsbereich: gleichzeitiges Messen von N Kontrasten der Inferenzstreifen für die N Impulse, wobei diese Messung für P weitere Verzögerungen des Bereichs wiederholt wird, um P x N weitere Kontraste von Interferenzstreifen zu erhalten,
   - wobei für jeden der N Impulse, ein Verzögerungswert zwischen diesem Impuls $(1_k)$ und dem Referenzimpuls (2) durch die Verzögerung, die dem maximalen Kontrast unter den P Kontrasten entspricht, bestimmt wird.

2. Verfahren zur Messung der Verzögerung zwischen N Impulsen nach dem vorstehenden Anspruch, **dadurch gekennzeichnet, dass** die N Impulse $(1_k)$ und der Referenzimpuls (2) die gleiche zentrale Wellenlänge aufweisen, dass die Ausbreitungsrichtung der N Impulse $(1_k)$ sich von der Ausbreitungsrichtung des Referenzimpulses (2) unterscheidet und dass die Interferenzstreifen räumliche Interferenzstreifen sind, die sich in N unterschiedlichen Bereichen (31) des Detektors befinden.

3. Verfahren zur Messung der Verzögerung zwischen N Impulsen nach Anspruch 1, **dadurch gekennzeichnet, dass** die zentralen Wellenlängen der N Impulse $(1_k)$ sich voneinander und von der zentralen Wellenlänge des Referenzimpulses (2) unterscheiden und dass die Interferenzstreifen zeitliche Interferenzstreifen sind, die sich an einer gleichen Stelle des Detektors (3) befinden.

4. System zur Messung der Verzögerung zwischen N Impulsen (1) mit einer Laufzeit kleiner als 100 Picosekunden, die sich in N Kanälen ausbreiten, umfassend:

- N Impulsquellen, die derart konfiguriert sind, dass die N Impulse ($1_k$) sich in parallelen Ausbreitungsrichtungen ausbreiten,
- einen Referenzimpulsgeber (2), der derart konfiguriert ist, dass sich der Referenzimpuls in einer Ausbreitungsrichtung ausbreitet, die der Ausbreitungsrichtung der N Impulse gegenüber geneigt ist und einer einstellbaren Verzögerungsleitung (5) zugeordnet ist, wobei die N Impulse und der Referenzimpuls die gleiche zentrale Wellenlänge und die gleiche Wiederholungsfrequenz aufweisen,
- einen Matrixdetektor (3),
- eine Bildgebungsvorrichtung, die derart konfiguriert ist, dass sie für jeden der N Impulse auf dem Detektor (3) eine zusammenhängende Summe des Impulses mit dem Referenzimpuls bildet, wobei diese Summe die räumlichen Interferenzstreifen erzeugt,

**dadurch gekennzeichnet, dass** es ferner umfasst:

- eine Vorrichtung (100) zum Aufrichten der Ebene der Referenzimpulswelle (2) relativ zur Ausbreitungsrichtung der N Impulse ($1_k$), die auf der Strecke des Referenzimpulses (2) umfasst:
- ein diffraktives optisches Element (101) zum periodischen Netzausgleich,
- eine optische Anordnung mit doppelter Fouriertransformation und vorgegebener Vergrößerung, die mit zwei Linsen (L1, L2) versehen ist und derart konfiguriert ist, dass die Ebene des Detektors (3) den Bildbrennpunkt der optischen Anordnung enthält und dass die Ebene des diffraktiven Elements (101) den Objektbrennpunkt enthält,
- Mittel zur Ausführung des Messverfahrens nach Anspruch 1 oder 2.

5. System zur Messung der Verzögerung zwischen N Impulsen ($1_k$) mit einer Laufzeit kleiner als 100 Picosekunden, die sich in N Kanälen ausbreiten, umfassend:

- N Impulsquellen, die derart konfiguriert sind, dass die N Impulse ($1_k$) sich in parallelen Ausbreitungsrichtungen ausbreiten,
- einen Referenzimpulsgeber (2), der einer einstellbaren Verzögerungsleitung (5) zugeordnet ist, wobei die N Impulse und der Referenzimpuls die gleiche Wiederholungsfrequenz aber unterschiedliche zentrale Wellenlängen aufweisen,
- einen Detektor in Form einer Photodiode (3),
- eine Bildgebungsvorrichtung, die derart konfiguriert ist, dass sie für jeden der N Impulse auf der Photodiode (3) eine zusammenhängende Summe des Impulses mit dem Referenzimpuls bildet, wobei diese Summe die zeitlichen Interferenzstreifen erzeugt,

**dadurch gekennzeichnet, dass** es Mittel zur Ausführung des Messverfahrens nach Anspruch 1 oder 3 umfasst.

6. System zur Phasenverriegelung und Synchronisation von N Impulsquellen mit einer Laufzeit kleiner als 100 Picosekunden, umfassend:

- N Impulsquellen mit gleicher Wiederholungsfrequenz, die jeweils mit Phasenmodulatoren (6) versehen sind,
- einen Referenzimpulsgeber (2) mit gleicher Wiederholungsfrequenz, der mit einer einstellbaren Verzögerungsleitung (5) versehen ist,
- einen Detektor (3),
- eine Bildgebungsvorrichtung, die derart konfiguriert ist, dass sie für jeden der N Impulse ($1_k$) auf dem Detektor (3) eine zusammenhängende Summe des Impulses mit dem Referenzimpuls bildet, wobei diese Summe Interferenzstreifen erzeugt,
- eine Phasenverriegelungsschleife (Schleife 2), umfassend:
- Mittel (14) zur Berechnung der Phasenverschiebungen zwischen jeder Quelle und dem Referenzimpulsgeber,
- Mittel (13) zur Steuerung von Phasenmodulatoren (6) als Funktion der Phasenverschiebungen,

**dadurch gekennzeichnet, dass** es ferner umfasst:

- eine jeder Quelle zugeordnete einstellbare Verzögerungsleitung (7),
- eine Phasenverriegelungsschleife (Schleife 1), umfassend:
- ein System zur Messung der Verzögerung zwischen den N Impulsen nach einem der Ansprüche 4 oder 5,
- Mittel (11) zur Steuerung der Verzögerungsleitungen der N Quellen als Funktion der gemessenen Verzögerungen.

7. Computerprogrammprodukt, wobei das Computerprogramm Code-Anweisungen umfasst, die bei Ausführung des Programms auf einem Computer die Ausführung der Schritte des Verfahrens nach einem der Ansprüche 1 - 3 ermöglichen.

**Claims**

1. A method for measuring the delay between N pulses (1) having a duration less than 100 picoseconds being propagated in N channels, which comprises the following steps:

   - collimated emission of these N pulses ($1_k$) having the same repetition frequency,
   - emission of a reference pulse (2) having the same repetition frequency capable of producing interference fringes with each of the N pulses,
   - for each of the N pulses, detection, by a detector (3), of the coherent sum of this pulse ($1_k$) with the reference pulse (2), this sum producing said interference fringes, the interference fringes originating from each of the N pulses being distinguishable from one another,

   **characterized in that** the reference pulse (2) is emitted with a delay relative to estimated times of arrival of the N pulses on the detector (3), this delay being adjustable over a determined range of delays, and **in that** the method further comprises the following steps:

   - for a delay of the range of delays, simultaneous measurement for the N pulses of N contrasts of the interference fringes, this measurement being reiterated for P other delays of said range, so as to obtain P x N other interference fringe contrasts,
   - for each of the N pulses, a delay value between this pulse ($1_k$) and the reference pulse (2) is determined by the delay corresponding to the maximum contrast out of the P contrasts.

2. The method for measuring the delay between N pulses as claimed in the preceding claim, **characterized in that** the N pulses ($1_k$) and the reference pulse (2) have the same central wavelength, the direction of propagation of the N pulses ($1_k$) is different from the direction of propagation of the reference pulse (2) and **in that** the interference fringes are spatial interference fringes located in N distinct zones (31) of the detector.

3. The method for measuring the delay between N pulses as claimed in claim 1, **characterized in that** the central wavelengths of the N pulses ($1_k$) are different to one another and different from the central wavelength of the reference pulse (2) and **in that** the interference fringes are temporal interference fringes located at a same point of the detector (3).

4. A system for measuring the delay between N pulses (1) having a duration less than 100 picoseconds being propagated in N channels, which comprises:

   - N pulse sources configured for the N pulses ($1_k$) to be propagated in parallel directions of propagation,
   - an emitter of a reference pulse (2) configured for the reference pulse to be propagated in a direction of propagation that is inclined relative to the direction of propagation of the N pulses, and associated with an adjustable delay line (5), the N pulses and the reference pulse having the same central wavelength and the same repetition frequency,
   - a matrix detector (3),
   - an imaging device configured to form, on the detector (3) for each of the N pulses, a coherent sum of this pulse with the reference pulse, this sum producing spatial interference fringes,

   **characterized in that** it further comprises:

   - a device (100) for straightening the direction of the wave plane of the reference pulse (2) relative to the direction of propagation of the N pulses ($1_k$) which comprises, on the path of the reference pulse (2):

    o a diffractive compensation optical element (101) with periodic grating,
    o an optical setup with double Fourier transform and with predetermined enlargement, provided with two lenses (L1, L2) and configured for the plane of the detector (3) to contain the image focal point of the optical setup, and for the plane of the diffractive element (101) to contain the object focal point,

- means for implementing the measurement method as claimed in claim 1 or 2.

5. A system for measuring the delay between N pulses ($1_k$) having a duration less than 100 picoseconds being propagated in N channels, which comprises:

- N pulse sources configured for the N pulses ($1_k$) to be propagated in parallel directions of propagation,
- an emitter of a reference pulse (2) associated with an adjustable delay line (5), the N pulses and the reference pulse having the same repetition frequency, but different central wavelengths,
- a detector in photodiode form (3),
- an imaging device configured to form, on the photodiode (3) for each of the N pulses, a coherent sum of this pulse with the reference pulse, this sum producing temporal interference fringes,

**characterized in that** it comprises means for implementing the measurement method as claimed in claim 1 or 3.

6. A system for phase-locking and synchronizing N pulse sources having a duration less than 100 picoseconds which comprises:

- N pulse sources having the same repetition frequency respectively provided with phase modulators (6),
- an emitter of a reference pulse (2) having the same repetition frequency, equipped with an adjustable delay line (5),
- a detector (3),
- an imaging device configured to form, on the detector for each of the N pulses ($1_k$), a coherent sum of this pulse with the reference pulse, this sum producing interference fringes,
- a phase-lock loop (loop 2) which comprises:

    o means (14) for computing phase-shifts between each source and the emitter of the reference pulse,
    o means (13) for driving the phase modulators (6) as a function of the phase-shifts,

**characterized in that** it further comprises:

- a variable delay line (7) associated with each source,
- a delay-lock loop (loop 1) which comprises:

    o a system for measuring the delay between the between N pulses as claimed in one of claims 4 or 5,
    o means (11) for driving the delay lines of the N sources as a function of the measured delays.

7. A computer program product, said computer program comprising code instructions making it possible to perform the steps of the method as claimed in any one of claims 1 to 3, when said program is run on a computer.

**FIG.1**

**FIG.3**

FIG.2

EP 3 384 259 B1

11 Pilotage des lignes à retard variables

BOUCLE 1

12 Calcul des retards

Visibilité des franges

13 Pilotage des modulateurs de phase

BOUCLE 2

14 Calcul des déphasages

Position des franges

$7_3$ $6_3$ $8_3$ Modules amplificateurs $10_3$ $1_3$

$7_2$ $6_2$ $8_2$ $10_2$

Caméra

$6_1$ $8_1$ $1_2$

Laser maître

$7_1$ Retards variables Modulateurs de phase

$10_1$

$1_1$

2

9

21 3

Pilotage ligne à retard référence

Ligne à retard variable référence

15 5

**FIG.4**

Impulsions incidentes

(a) Intensité optique I

(b)

(c)

3 $I_m$ 3 $1_3$ $I_m$ 3 $I_M$

$10_3$ 2 2 $1_2$ $I_M$ $I_i$

$I_i$ $1_1$ $I_M$ 2

$10_2$

$10_1$

$10_{20}$ 21 Coordonnées spatiales $I_M$ $I_m$ $I_m$

**FIG.5a**

Impulsions
incidentes

Intensité
optique I

$10_3$

$10_2$

$10_1$

3

2

$1_3$

$I_M$

$1_2$

$I_M$

$1_1$

$I_M$

$10_{20}$

21

Coordonnées
spatiales

FIG.5b

Impulsions
incidentes

$1_3$

$1_2$

$1_1$

3 Caméra

$f_2$

$\theta_2$

$f_1$

$f_1$

$\theta$

101

$L_1$

$L_2$

2

$\varphi_1$

$f_2$

$\varphi$

$\psi$

100

2

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **DE M. ANTIER et al.** kHz closed loop interferometric technique for coherent fiber beam combining. *JSTQE,* vol. 20 (5
- **DE R. TREBINO et al.** using phase retieval to measure the intensity and phase of ultrashort puises : frequency-resolved optical gating. *J. Opt. Soc. Am A,* vol. 10
- **MARIE ANTIER.** *Mesure interférométrique de phase et application à la combinaison cohérente d'un grand nombre de fibres amplificatrices*
- **DE ANTIER et al.** Interferometric phase measurement techniques for coherent beam combining. SPIE

- **DE DANIAULT et al.** XCAN - A coherent amplification network of femtosecond fiber chirped-pulse amplifiers. *The European Physical Journal*
- **DE LOMBARD et al.** Collective synchronization and phase locking of fs fiber amplifiers: requirements and potential solutions. *The European Physical Journal*
- **J. BOURDERIONNET et al.** Collective coherent phase combining of 64 fibers. *Opt Express.,* vol. 19